# FASCICULE DE BREVET EUROPEEN

(11) **EP 0 649 229 B1**
(45) Date de publication et mention de la délivrance du brevet: **02.12.1998**
(21) Numéro de dépôt: 94402294.6
(22) Date de dépôt: 12.10.1994
(51) Int. Cl.: H04B 10/20, H04B 10/207

(54) **Réseau local de transmission optique**
Optisches lokales Netzwerk
Optical local area network

(30) Priorité: 14.10.1993 FR 9312225
(43) Date de publication de la demande: 19.04.1995
(73) Titulaire: CEGELEC, 92300 Levallois-Perret (FR)
(72) Inventeur: Bernard, Jean-Jacques, F-91810 Vert le grand (FR); Pitel, Fabrice, F-91580 Etrechy (FR); Comte, Patrice, F-95870 Bezons (FR)
(74) Mandataire: Fournier, Michel

(56) Documents cités:
- US-A- 4 781 427

## Description

La présente invention concerne un réseau local de transmission optique. On sait que, dans une installation industrielle, un réseau local assure la liaison entre des capteurs et/ou des actionneurs et des systèmes d'automatisation tels que des automates programmables, des contrôleurs ou des régulateurs...... Ces capteurs, actionneurs et systèmes constituent des abonnés à ce réseau. L'information émise par un abonné est typiquement transmise à tous les autres abonnés grâce à des fibres optiques et à des étoiles optiques actives assurant des couplages optiques pour constituer des noeuds de ce réseau.

Des trames portant l'information sont transmises à un débit typiquement égal à 2,5 Mbit/s. Il est envisagé d'élever le débit à 5 ou 10 Mbit/s.

Une famille de réseaux locaux connus est décrite dans la norme française UTE C 46-607:
"Bus FIP pour échange d'informations entre transmetteurs, actionneurs et automates - Couche physique en bande de base sur fibre optique".

Un réseau local de cette famille connue comporte des éléments qui lui sont communs, quant à leurs fonctions indiquées ci-après, avec un réseau local selon la présente invention et qui sont les suivants:
- des postes aptes à émettre et à recevoir des signaux optiques. Ces postes sont notamment des postes d'abonnés reliés, par exemple électriquement, et affectés chacun à un abonné.
- Des noeuds constitués par des étoiles actives.
- Des fibres primaires raccordant optiquement chacun de ces noeuds à des postes associés à ce noeud.
- Enfin des fibres secondaires raccordant optiquement chacun de ces noeuds à d'autres de ces noeuds qui sont ainsi raccordés directement à ce noeud. Grâce à ces fibres secondaires chaque noeud est raccordé au moins indirectement à tous les autres. Par l'intermédiaire des fibres auxquelles il est raccordé, chaque noeud est apte à recevoir un signal optique entrant portant une information et à émettre en réponse des signaux optiques sortants correspondants portant cette information vers tous les postes associés et tous les noeuds raccordés directement à ce noeud. Il comporte pour cela des transducteurs optoélectriques et des amplificateurs électriques. Plus précisément il comporte, pour chaque association d'un signal optique entrant et d'un signal optique sortant correspondant,
- un transducteur récepteur pour transformer ce signal optique entrant en un signal électrique de réception,
- un amplificateur pour amplifier ce signal électrique,
- et un transducteur émetteur pour transformer ce signal électrique amplifié en un signal optique sortant.

Chaque transducteur récepteur ou émetteur sera dit ci-après primaire si ce signal optique est transmis par une fibre primaire, ou secondaire si ce signal est transmis par une fibre secondaire.

Au sein de cette famille connue un réseau local est notamment caractérisé par une longueur d'onde, qui constitue la longueur d'onde de ce réseau et sur laquelle tous les transducteurs de ce réseau sont accordés. Chaque noeud est raccordé à chacun des postes qui lui sont associés par deux fibres optiques raccordées respectivement à deux transducteurs primaires de ce noeud, l'un émetteur l'autre récepteur et tous deux affectés exclusivement à ce poste.

Le noeud comporte pour cela un transducteur émetteur primaire et un transducteur récepteur primaire pour chacun des postes qui lui sont associés.

Chaque raccordement direct entre deux noeuds de ce réseau est assuré par deux fibres secondaires qui sont affectées exclusivement au raccordement de ces deux noeuds. Une première fibre guide les signaux entrant dans un premier noeud et sortant du deuxième. La deuxième fibre guide les signaux sortant de ce premier noeud et entrant dans le deuxième. Les signaux sortant de ce premier noeud (ou de ce deuxième noeud) sont émis par un transducteur émetteur secondaire de ce premier (ou de ce deuxième) noeud et reçus par un transducteur récepteur secondaire de ce deuxième (ou de ce premier) noeud, ces deux transducteurs étant affectés exclusivement au raccordement de ces deux noeuds. Chaque noeud comporte pour cela un transducteur émetteur secondaire et un transducteur récepteur secondaire pour chaque autre noeud raccordé directement à ce noeud.

Un tel réseau connu présente l'inconvénient que, même si on utilise pour le constituer des éléments aussi bien choisis que possible, le nombre des abonnés qu'il permet de relier apparaît trop limité par rapport aux besoins de l'industrie. De plus son coût est élevé.

La présente invention a notamment pour buts de permettre d'augmenter le nombre des abonnés raccordés à un réseau local, et/ou de réduire le coût d'un tel réseau.

Dans ces buts, les transducteurs primaires récepteurs et émetteurs d'un réseau selon cette invention sont accordés sur deux longueurs d'onde respectives différentes,
- une fibre primaire unique raccorde chaque poste au noeud associé,
- les transducteurs secondaires récepteurs et émetteurs sont accordés sur l'une de ces deux longueurs d'ondes constituant une longueur d'onde commune,
- une fibre secondaire unique raccorde deux noeuds lorsque ces deux noeuds sont mutuellement raccordés directement,
- et des moyens sont prévus pour que, lorsqu'un premier noeud émet un signal optique sur les fibres secondaires, un signal optique émis en réponse par un deuxième noeud ne puisse pas perturber le fonctionnement de ce premier noeud.

Ces moyens comportent par exemple des mémoires tampons disposées dans chaque noeud pour permettre à ce dernier, lorsqu'il reçoit un signal, d'attendre pour le réémettre un temps suffisant pour que ce signal réémis ne puisse interférer avec ce signal reçu.

De préférence chaque noeud comporte un transducteur commun accordé sur la longueur d'onde commune et constituant à la fois un transducteur primaire et un transducteur secondaire.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

La figure 1 représente une vue partielle d'un premier réseau selon cette invention.

La figure 2 représente une vue d'un noeud et de deux postes d'abonnés de ce réseau.

La figure 3 représente une vue simplifiée du noeud de la figure 2.

La figure 4 représente une vue simplifiée d'un noeud d'un deuxième réseau selon cette invention.

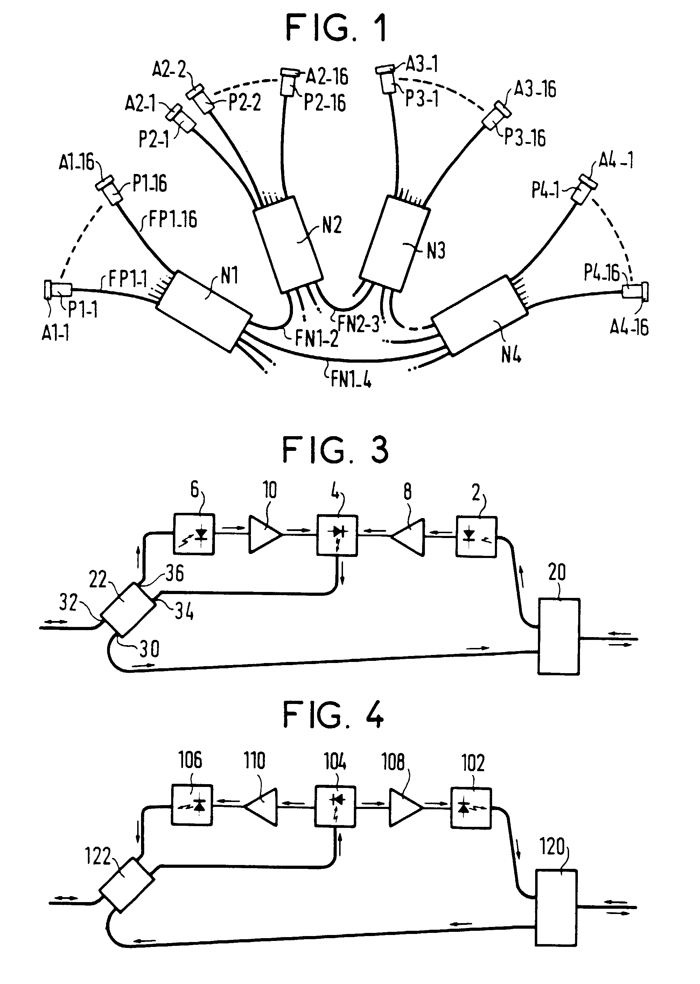

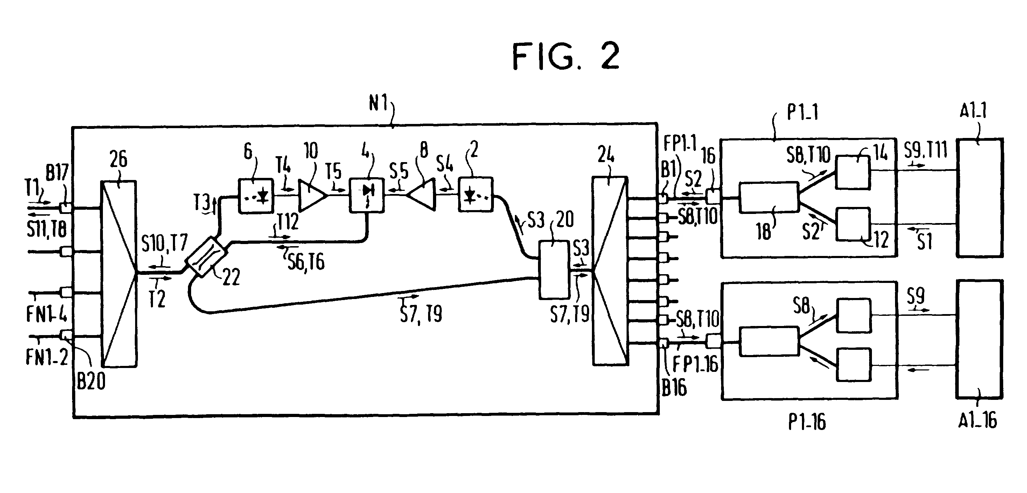

Conformément aux figures 1 et 2, un réseau selon cette invention présente une disposition de base connue qui va être tout d'abord exposée:
Selon cette disposition ce réseau comporte une pluralité de postes P1-1...P4-16 munis de bornes optiques 16. Chacun de ces postes comporte:
- un émetteur 12 apte à recevoir un signal d'entrée S1 porteur d'une information et à fournir en réponse un message S2 incluant cette information, et émis par ce poste,
- et un récepteur 14 pour traiter un message S8, T10 incluant une information et reçu par ce poste, ce récepteur étant apte à fournir en réponse un signal de sortie S9, T11 incluant cette information.
Ces postes sont répartis en plusieurs groupes de postes, par exemple...tels groupes, P1-1...P1-16... P2-1...P2-16 comportant chacun au moins un, par exemple 16 postes. La plupart de ces postes sont des postes d'abonnés P1-1...P1-16, P2-2...P4-16 connectés respectivement à des abonnés A1- 1...A1-16, A2-2...A4-16 extérieurs au réseau. Chaque abonné A1-1 connecté à un poste P1-1 peut inclure dans un signal d'entrée S1 de ce poste une information à transmettre aux autres abonnés. Il peut d'autre part recevoir les signaux de sortie S9, T11 de ce poste pour en utiliser l'information. Les signaux d'entrée et de sortie de ces postes d'abonnés constituent des signaux d'entrée et de sortie du réseau, respectivement.

Un organe de gestion A2-1 est relié aux postes d'abonnés pour autoriser à chaque instant un seul de ces postes à émettre un message. Il peut par exemple constituer l'un des postes de ce réseau. Il est alors relié aux postes d'abonnés de la même manière que les postes d'abonnés sont reliés entre eux. Cette manière sera indiquée plus loin.

Plusieurs noeuds N1...N4 de ce réseau sont associés respectivement aux groupes de postes, chaque noeud N1 associé à un groupe de postes P1-1...P1-16 étant aussi associé aux postes de ce groupe. Un tel noeud comporte les éléments suivants:
- Des bornes primaires B1...B16 pour permettre à ce noeud d'échanger des messages avec les postes associés. Ces messages seront dits ci-après "primaires" et ces messages primaires seront en outre dits "entrants" tels le message S2, ou "sortants", tels les messages S8 et T10 selon qu'ils sont reçus ou émis par ce noeud.
- Au moins deux bornes secondaires, par exemple quatre telles bornes B17...B20, pour permettre à ce noeud d'échanger des messages avec d'autres noeuds N2...N4. Ces messages seront dits secondaires, et entrants tels le message T1 ou sortants tels les messages S11 et T8 selon qu'ils sont reçus ou émis par ce noeud. Ces messages primaires et secondaires, entrants et sortants, présentent la forme de signaux optiques constitués par des modulations d'ondes porteuses optiques, et des longueurs d'onde de ces ondes porteuses constituent des longueurs d'onde de ces messages, respectivement.
- Des amplificateurs 8, 10 pour recevoir des signaux électriques de réception S4, T4 et pour fournir en réponse des signaux électriques amplifiés S5, T5.
- Enfin des transducteurs optoélectriques. Chacun de ces transducteurs peut être récepteur. Tel est le cas des transducteurs 2 et 6 qui transfèrent chacune une information d'un signal optique S3 ou T3 provenant d'une borne B1 ou B17 à un signal électrique de réception S4 ou T4 fourni à un amplificateur 8 ou 10. Il peut aussi être émetteur. Tel est le cas du transducteur 4 qui transfère une information d'un signal électrique amplifié S5 ou T5 provenant d'un amplificateur 8 ou 10 à un signal optique S6 ou T6 fourni à une borne B1, B16 ou B17. Ce transducteur est en même temps primaire ou secondaire selon que cette borne est primaire ou secondaire. L'ensemble de ces transducteurs permet de former les messages sortants à partir des messages entrants.

Chaque émetteur ou récepteur d'un poste et chaque transducteur d'un noeud est accordé sur une longueur d'onde qui est celle des signaux optiques dont il transfère l'information.

Des fibres optiques primaires FP1-1...FP1-16 relient les bornes optiques 16 des postes P1-1...P1-16 de chaque groupe de postes aux bornes primaires B1...B16 du noeud N1 associé à ce groupe de postes, respectivement, pour que les messages émis par ces postes constituent les messages primaires entrant dans ce noeud et que les messages primaires sortant de ce noeud soient reçus par ces postes.

Des fibres optiques secondaires telles que FN1-2 ou FN1-4 relient chacune deux bornes secondaires appartenant respectivement à deux noeuds tels que N1 et N2 ou N4 pour que les messages secondaires sortant de l'un de ces noeuds constituent les messages secondaires entrant dans l'autre.

Conformément à une première disposition plus particulière que l'on adopte selon la présente invention, et que l'on va d'abord décrire dans sa généralité, les messages primaires entrants S2 et sortants S8, T10 ont respectivement une première et une deuxième longueurs d'onde du réseau. Ces deux longueurs d'onde sont différentes et l'une d'entre elles constitue une longueur d'onde commune. Les messages secondaires entrants T1 et sortants S11, T8 ont cette longueur d'onde commune.

Chaque poste tel que P1-1 comporte:
- une borne optique 16,
- et un séparateur de longueurs d'onde 18 reliant cette borne d'une part à l'émetteur 12 de ce poste en ce qui concerne cette première longueur d'onde et d'autre part au récepteur 14 de ce poste en ce qui concerne cette seconde longueur d'onde. Il comporte de plus des circuits électroniques de gestion et des mémoires pour communiquer avec l'abonné qui lui est connecté, et pour vérifier, lorsqu'il a émis un message, qu'il reçoit bien du noeud associé un message en retour reproduisant correctement ce message émis. Si un tel message en retour n'est pas reçu, ce poste émet à nouveau le même message. D'autres dispositions connues en elles mêmes et non décrites ici sont adoptées pour limiter les conséquences dommageables d'une défaillance d'un élément du réseau.

Le noeud N1 associé à ce poste comporte les éléments suivants:
- Une borne primaire B1 associée ce poste et reliée à la borne optique 16 de ce poste par une fibre primaire FP1-1.
- Un séparateur de longueurs d'onde 20.
- Un transducteur récepteur primaire 2 accordé sur cette première longueur d'onde et raccordé à cette borne primaire B1 par l'intermédiaire de ce séparateur 20 en ce qui concerne cette première longueur d'onde.
- Un transducteur émetteur primaire 4 accordé sur cette deuxième longueur d'onde et raccordé à cette borne primaire par l'intermédiaire de ce séparateur en ce qui concerne cette deuxième longueur d'onde. Celui de ces deux transducteurs primaires qui est accordé sur la longueur d'onde commune est constitué par un transducteur dit "commun" 4 dont les fonctions seront précisées plus loin. L'autre de ces deux transducteurs primaires constitue un transducteur affecté aux messages primaires 2.
- Un coupleur passif optique 22.
- Un transducteur récepteur secondaire 6 accordé sur la longueur d'onde commune et raccordé optiquement à une borne secondaire B17 par l'intermédiaire de ce coupleur passif 22.
- Un transducteur émetteur secondaire 6 accordé sur la longueur d'onde commune et raccordé optiquement à une borne secondaire B17 par l'intermédiaire du coupleur passif 22. Le transducteur commun constitue aussi l'un de ces deux transducteurs secondaires. Plus précisément il constitue à la fois les transducteurs primaire et secondaire émetteurs, ce qui est le cas du transducteur 4 des figures 2 et 3, ou à la fois les transducteurs primaire et secondaire récepteurs, ce qui est le cas du transducteur 104 de la figure 4. L'autre de ces deux transducteurs secondaires constitue un transducteur affecté aux messages secondaires, tels les transducteurs 6 et 106. Le transducteur commun 4 ou 104 est relié électriquement aux deux transducteurs affectés 2 et 6 ou 102 et 106 par l'intermédiaire de deux amplificateurs 8 et 10 ou 108 et 110, respectivement.

On va maintenant exposer d'autres dispositions avantageuses qui sont adoptées dans les réseaux donnés en exemple:
- Le coupleur passif 22 présente deux paires de bornes 30, 32 et 34, 36 (voir fig.3) et est apte à recevoir un signal optique sur au moins une borne de chacune de ces paires et à diviser alors ce signal pour le restituer partiellement sur chacune des deux bornes de l'autre paire. Le transducteur commun 4 est alors relié optiquement à la borne primaire B1 du noeud N1 par l'intermédiaire de ce coupleur passif et du séparateur de longueurs d'onde 20 en série de manière à permettre la transmsision de signaux optiques entre ce transducteur et cette borne.
- Ce séparateur de longueurs d'onde 20 relie le transducteur commun 4 et le transducteur affecté aux messages primaires 2 à plusieurs bornes primaires B1...B16 du noeud N1 à la fois et de préférence à toutes ces bornes par l'intermédiaire d'un diviseur optique passif primaire 24.
- Le coupleur passif 22 relie le transducteur commun 4 et le transducteur affecté aux messages secondaires 6 à plusieurs bornes secondaires B17...B20 dudit noeud N1 et de préférence à toutes ces bornes par l'intermédiaire d'un diviseur optique passif secondaire 26.

Ces trois dernières dispositions permettent de n'inclure dans le noeud N1 que trois transducteurs seulement: le transducteur commun 4, le transducteur affecté aux messages primaires 2, et celui affecté aux messages secondaires 6.

Dans le cas typique où les fibres secondaires FN1-2, FN1-10, F2-3, FN2-4 sont plus longues que les fibres primaires, et doivent n'affaiblir qu'aussi peu que possible les messages secondaires, le choix des longueurs d'onde et des matériaux des fibres est de préférence tel que les fibres secondaires présentent un coefficient d'absorption moindre pour la longueur d'onde commune que pour l'autre longueur d'onde du réseau. La longueur d'onde commune est par exemple 1300 nm, l'autre longueur d'onde du réseau étant 800 nm. Quant aux fibres primaires, elles sont choisies pour présenter des coefficients d'absorption faibles à ces deux longueurs d'onde.

Les noeuds des premier et deuxième réseaux selon l'invention présentent, sur les schémas simplifiés des figures 3 et 4, des éléments analogues disposés selon deux architectures identiques. Chaque élément du second réseau est repéré par un numéro de référence qui est le numéro de référence de l'élément analogue du premier réseau augmenté de 100.

Les différences entre ces deux réseaux sont les suivantes:

Le transducteur commun est un émetteur 4 dans le premier réseau et un récepteur 104 dans le deuxième.

Les transducteurs affectés aux messages primaires et secondaires sont des récepteurs 2 et 6 dans le premier réseau et des émetteurs 102 et 106 dans le deuxième, respectivement.

Quant aux sens de propagation des signaux optiques et électriques, entre le séparateur de longueurs d'ondes 20 ou 120 et le coupleur passif 22 ou 122 ils sont inversés de l'un à l'autre de ces deux réseaux de même que les sens de connexion des amplificateurs 8 ou 108 et 10 ou 110.

## Revendications

1. Réseau local de transmission optique comportant:
- des postes (P1-1...P4-16) aptes à émettre et à recevoir des signaux optiques,
- des noeuds (N1...N4),
- des fibres primaires (FP1-1...FP1-16) raccordant optiquement chacun de ces noeuds (N1) à des postes (P1-1...P1-1) associés à ce noeud,
- et des fibres secondaires (FN1-2, FN1-4) raccordant optiquement chacun de ces noeuds (N1) à d'autres de ces noeuds constituant des noeuds raccordés directement (N2, N4) à ce noeud (N1) de manière que chacun de ces noeuds soit raccordé au moins indirectement à tous les autres,
- chacun de ces noeuds (N1) étant apte à recevoir par l'une de ces fibres un signal optique entrant (S2, T1) portant une information et à émettre en réponse des signaux optiques sortants correspondants (S8, S11, T8, T10) portant cette information vers tous les postes associés (P1-1...P1-16) et tous les noeuds (N2, N4) raccordés directement à ce noeud, ce noeud comportant pour cela, pour chaque association d'un signal optique entrant (S2) et d'un signal optique sortant (S8, S11) correspondant,
- un transducteur récepteur (2, 6) pour transformer ce signal optique entrant en un signal électrique de réception (S4),
- un amplificateur (8, 10) pour amplifier ce signal électrique,
- et un transducteur émetteur (4) pour transformer ce signal électrique amplifié (S5) en un signal optique sortant, chaque transducteur récepteur (2, 6, 104) ou émetteur (4, 102, 106) étant primaire (2, 4, 102, 104) si ce signal optique est transmis par une fibre primaire, ce transducteur étant secondaire (4, 6, 104, 106) si ce signal est transmis par une fibre secondaire,
- ce réseau étant caractérisé par le fait que les transducteurs primaires récepteurs (2, 104) et émetteurs (4, 102) sont accordés sur deux longueurs d'onde respectives différentes,
- une fibre primaire unique (FP1-1) raccordant chaque poste (P1-1) au noeud associé (N1),
- les transducteurs secondaires récepteurs (6, 104) et émetteurs (4, 106) étant accordés sur l'une de ces deux longueurs d'ondes constituant une longueur d'onde commune,
- une fibre secondaire unique (FN1-2) raccordant deux noeuds (N1, N2) lorsque ces deux noeuds sont mutuellement raccordés directement,
- des moyens étant prévus pour que, lorsqu'un premier noeud (N1) émet un signal optique sur les fibres secondaires (FN1-2, FN1-4), un signal optique émis en réponse par un deuxième noeud (N2) ne puisse pas perturber le fonctionnement de ce premier noeud.

2. Réseau selon la revendication 1, caractérisé par le fait que chaque noeud (N1) comporte un transducteur commun (4, 104) accordé sur la longueur d'onde commune et constituant à la fois un transducteur primaire et un transducteur secondaire.

3. Réseau selon la revendication 2, ce réseau comportant une pluralité de postes (P1-1...P4-16) munis de bornes optiques (16) et comportant chacun:
- un émetteur (12) apte à recevoir un signal d'entrée (S1) porteur d'une information et à fournir en réponse un message (S2) incluant cette information, et émis par ce poste,
- et un récepteur (14) pour traiter un message (S8, T10) incluant une information et reçu par ce poste, ce récepteur étant apte à fournir en réponse un signal de sortie (S9, T11) incluant cette information,
- ces postes étant répartis en plusieurs groupes de postes (P1-1...P1-16) (P2-1...P2-16) comportant chacun au moins un poste,
- certains au moins de ces postes étant des postes d'abonnés (P1-1...P1-16, P2-2...P4-16) connectés respectivement à des abonnés (A1-1...A1-16, A2-2...A4-16) extérieurs au réseau pour permettre à chaque abonné (A1-1) connecté à un poste (P1-1) d'une part d'inclure dans un signal d'entrée (S1) de ce poste une information à transmettre aux autres abonnés, d'autre part de recevoir les signaux de sortie (S9, T11) de ce poste pour en utiliser l'information, de sorte que les signaux d'entrée et de sortie de ces postes d'abonnés constituent des signaux d'entrée et de sortie du réseau, respectivement,
- ce réseau comportant encore:
- un organe de gestion (A2-1) relié aux postes d'abonnés pour autoriser à chaque instant un seul de ces postes à émettre un message,
- et plusieurs noeuds (N1...N4) associés respectivement auxdits groupes de postes, chaque noeud (N1) associé à un groupe de postes (P1-1...P1-16) étant aussi associé aux postes de ce groupe et comportant:
- des bornes primaires (B1...B16) pour permettre à ce noeud d'échanger des messages avec ces postes associés, ces messages étant primaires, ces messages primaires étant en même temps entrants (S2) ou sortants (S8, T10) selon qu'ils sont reçus ou émis par ce noeud,
- au moins deux bornes secondaires (B17...B20) pour permettre à ce noeud d'échanger des messages avec d'autres noeuds (N2...N4), ces messages étant secondaires, ces messages secondaires étant en même temps entrants (T1) ou sortants (S11, T8) selon qu'ils sont reçus ou émis par ce noeud, ces messages primaires et secondaires, entrants et sortants présentant la forme de signaux optiques constitués par des modulations d'ondes porteuses optiques, des longueurs d'onde de ces ondes porteuses constituant des longueurs d'onde de ces messages, respectivement,
- des amplificateurs (8, 10) pour recevoir des signaux électriques de réception (S4, T4) et pour fournir en réponse des signaux électriques amplifiés (S5, T5),
- et des transducteurs, chacun de ces transducteurs étant soit récepteur (2, 6) pour transférer une information d'un signal optique (S3, T3) provenant d'une borne (B1, B17) à un signal électrique de réception (S4, T4) fourni à un amplificateur (8, 10), soit émetteur (4) pour transférer une information d'un signal électrique amplifié (S5, T5) provenant d'un amplificateur (8, 10) à un signal optique (S6, T6) fourni à une borne (B1, B16, B17), ce transducteur étant en même temps soit primaire soit secondaire selon que cette borne est primaire ou secondaire, de manière à former les messages sortants à partir des messages entrants,
- chaque émetteur ou récepteur d'un poste et chaque transducteur d'un noeud étant accordé sur une longueur d'onde qui est celle des signaux optiques dont il transfère l'information,
- ce réseau comportant encore:
- des fibres optiques primaires (FP1-1...FP1-16) reliant les bornes optiques (16) des postes (P1-1...P1-16) de chaque groupe de postes aux bornes primaires (B1...B16) du noeud (N1) associé à ce groupe de postes, respectivement, pour que les messages émis par ces postes constituent les messages primaires entrant dans ce noeud et que les messages primaires sortant de ce noeud soient reçus par ces postes,
- et des fibres optiques secondaires (FN1-2, FN1-4) reliant chacune deux bornes secondaires appartenant respectivement à deux noeuds (N1, N2, N4) pour que les messages secondaires sortants de l'un de ces noeuds constituent les messages secondaires entrant dans l'autre,
ce réseau étant caractérisé par le fait que lesdits messages primaires entrants (S2) et sortants (S8, T10) ont respectivement une première et une deuxième longueurs d'onde de ce réseau, ces deux longueurs d'onde étant différentes et l'une d'entre elles constituant une longueur d'onde commune, lesdits messages secondaires entrants (T1) et sortants (S11, T8) ayant cette longueur d'onde commune,
- chaque poste (P1-1) comportant:
- une borne optique (16),
- et un séparateur de longueurs d'onde (18) reliant cette borne d'une part à l'émetteur (12) de ce poste en ce qui concerne cette première longueur d'onde et d'autre part au récepteur (14) de ce poste en ce qui concerne cette seconde longueur d'onde,
- le noeud (N1) associé à ce poste comportant:
- une dite borne primaire (B1) associée ce poste et reliée à la borne optique (16) de ce poste par une dite fibre primaire (FP1-1),
- un séparateur de longueurs d'onde (20),
- un transducteur récepteur primaire 2 accordé sur cette première longueur d'onde et raccordé à cette borne primaire (B1) par l'intermédiaire au moins de ce séparateur (20) en ce qui concerne cette première longueur d'onde,
- un transducteur émetteur primaire (4) accordé sur cette deuxième longueur d'onde et raccordé à cette borne primaire par l'intermédiaire au moins de ce séparateur en ce qui concerne cette deuxième longueur d'onde, celui de ces deux transducteurs primaires qui est accordé sur la longueur d'onde commune constituant un transducteur commun (4), l'autre de ces deux transducteurs primaires constituant un transducteur affecté aux messages primaires (2),
- un coupleur passif optique (22),
- un transducteur récepteur secondaire (6) accordé sur la longueur d'onde commune et raccordé optiquement à une borne secondaire (B17) par l'intermédiaire de ce coupleur passif (22),
- un transducteur émetteur secondaire (6) accordé sur la longueur d'onde commune et raccordé optiquement à une borne secondaire (B17) par l'intermédiaire du coupleur passif (22), l'un de ces deux transducteurs secondaires étant constitué par ledit transducteur commun et étant le transducteur secondaire émetteur (4) ou récepteur (104), selon que ce transducteur commun est constitué par le transducteur primaire émetteur ou récepteur, l'autre de ces deux transducteurs secondaires constituant un transducteur affecté aux messages secondaires (6, 106), le transducteur commun (4, 104) étant relié électriquement aux deux dits transducteurs affectés (2, 6, 102, 106) par l'intermédiaire de deux amplificateurs (8, 10, 108, 110), respectivement.

4. Réseau selon la revendication 3, caractérisé par le fait que le coupleur passif (22) présente deux paires de bornes (30, 32) (34, 36) et est apte à recevoir un signal optique sur au moins une borne de chacune de ces paires et à diviser alors ce signal pour le restituer partiellement sur chacune des deux bornes de l'autre paire, le transducteur commun (4) étant relié optiquement à ladite borne primaire (B1) dudit noeud (N1) par l'intermédiaire de ce coupleur passif et du séparateur de longueurs d'onde (20) en série de manière à permettre la transmsision de signaux optiques entre ce transducteur et cette borne.

5. Réseau selon la revendication 3, caractérisé par le fait que le séparateur de longueurs d'onde (20) relie le transducteur commun (4) et le transducteur affecté aux messages primaires (2) à plusieurs bornes primaires (B1...B16) dudit noeud (N1) à la fois par l'intermédiaire d'un diviseur optique passif primaire (24).

6. Réseau selon la revendication 3, caractérisé par le fait que le séparateur de longueurs d'onde (20) relie le transducteur commun (4) et le transducteur affecté aux messages primaires (2) à toutes les bornes primaires (B1...B16) dudit noeud (N1) à la fois par l'intermédiaire d'un diviseur optique passif primaire (24).

7. Réseau selon la revendication 3, caractérisé par le fait que le coupleur passif (22) relie le transducteur commun (4) et le transducteur affecté aux messages secondaires (6) à plusieurs bornes secondaires (B17...B20) dudit noeud (N1) par l'intermédiaire d'un diviseur optique passif secondaire (26).

8. Réseau selon la revendication 3, caractérisé par le fait que le coupleur passif (22) relie le transducteur commun (4) et le transducteur affecté aux messages secondaires (6) à toutes les bornes secondaires (B17...B20) dudit noeud (N1) par l'intermédiaire d'un diviseur optique passif secondaire (26).

9. Réseau selon la revendication 3, caractérisé par le fait que lesdites fibres secondaires (FN1-2, FN1-10, F2-3, FN2-4) présentent un coefficient d'absorption moindre pour ladite longueur d'onde commune que pour l'autre longueur d'onde du réseau.

## Patentansprüche

1. Lokales Netzwerk zur optischen Übertragung, welches umfasst:
- Posten (P1-1...P4-16), die fähig sind, optische Signale zu senden und zu empfangen,
- Knoten (N1...N4),
- primäre Fasern (FP1-1...FP1-16), die jeden dieser Knoten (Nl) mit den zu diesem Knoten gehörigen Posten (P1-1...P1-1) verbinden,
- und sekundäre Fasern (FN1-2, FN1-4), die jeden dieser Knoten (N1) mit weiteren dieser Knoten verbinden, wobei Knoten (N2, N4) gebildet werden, die direkt mit diesen Knoten (N1) verbunden sind, so dass jeder dieser Knoten wenigstens indirekt mit allen anderen verbunden ist,
- wobei jeder dieser Knoten (N1) fähig ist, durch eine dieser Fasern ein eingehendes optisches Signal (S2, T1), das eine Information trägt, zu empfangen und in Antwort entsprechende hinausgehende optische Signale (S8, S11, T8, T10), die diese Information tragen, zu allen zugehörigen Posten (P1-1...P1-16) und allen Knoten (N2, N4) zu senden, die direkt mit diesen Knoten verbunden sind, wobei dieser Knoten deshalb für jede Verbindung eines eingehenden, optischen Signals (S2) und eines entsprechenden hinausgehenden optischen Signals (S8, S11) umfasst:
- einen Empfangstransducer (2, 6) zum Umwandeln dieses eingehenden optischen Signals in ein elektrisches Empfangssignal (S4),
- einen Verstärker (8, 10) zum Verstärken dieses elektrischen Signals,
- einen Sendetransducer (4) zum Umwandeln dieses verstärkten elektrischen Signals (S5) in ein hinausgehendes optisches Signal, wobei jeder Empfangs- (2, 6, 104) oder Sendetransducer (4, 102, 106) primär ist (2, 4, 102, 104), wenn dieses optische Signal von einer primären Faser übertragen wird, wobei dieser Transducer sekundär ist (4, 6, 104, 106), wenn dieses Signal von einer sekundären Faser übertragen wird,
**dadurch gekennzeichnet**, dass
- die primären Empfangs- (2, 104) und Sendetransducer (4, 102) auf zwei verschiedene jeweilige Wellenlängen eingestellt sind,
- wobei eine einzige primäre Faser (FP1-1) jeden Posten (P1-1) mit dem zugehörigen Knoten (N1) verbindet,
- wobei die sekundären Empfangs- (6, 104) und Sendetransducer (4, 106) auf eine dieser beiden Wellenlängen eingestellt sind, die eine gemeinsame Wellenlänge bilden,
- wobei eine einzige sekundäre Faser (FN1-2) zwei Knoten (N1, N2) verbindet, wenn diese beiden Knoten wechselseitig direkt verbunden sind,
- wobei Mittel vorgesehen sind, damit, wenn ein erster Knoten (N1) ein optisches Signal auf den sekundären Fasern (FN1-2, FN1-4) sendet, ein von einem zweiten Knoten (N2) in Antwort gesendetes Signal nicht die Funktion dieses ersten Knotens stören kann.

2. Netzwerk nach Anspruch 1, dadurch gekennzeichnet, dass jeder Knoten (N1) einen gemeinsamen Transducer (4, 104) aufweist, der auf die gemeinsame Wellenlänge eingestellt ist und gleichzeitig einen primären Transducer und einen sekundären Transducer bildet.

3. Netzwerk nach Anspruch 2, wobei dieses Netzwerk eine Vielzahl von Posten (P1-1...P4-16) aufweist, die mit optischen Anschlüssen (16) versehen sind und jeweils umfassen:
- einen Sender (12), der fähig ist, ein eine Information tragendes Eingangssignal (S1) zu empfangen und in Antwort eine Kachricht (S2) zu liefern, die diese Information einschließt und von diesem Posten gesendet wird,
- einen Empfänger (14) zum Verarbeiten einer Nachricht (S8, T10), die eine Information einschließt und von diesem Posten empfangen wird, wobei der Empfänger fähig ist, in Antwort ein diese Information einschließendes Ausgangssignal (S9, T11) zu liefern,
- wobei diese Posten in mehrere Gruppen von Posten (P1-1...P1-16) (P2-1...P2-16) verteilt sind, die jeweils wenigstens einen Posten aufweisen,
- wobei wenigstens einige dieser Posten abonnierte Posten (P1-1...P1-16, P2-2...P4-16) sind, die jeweils mit Teilnehmern (A1-1...A1-16, A2-2...A4-16) außerhalb des Netzwerks verbunden sind, um jedem mit einem Posten (P1-1) verbundenen Teilnehmer (A1-1) zu gestatten, einerseits in das Eingangssignal (S1) dieses Postens eine zu anderen Teilnehmern zu übertragende Information einzuschließen, andererseits die Ausgangssignale (S9, T11) dieses Postens zu empfangen, um die Information darin zu nutzen, so dass die Eingangs- und Ausgangssignale dieser abonnierten Posten Eingangs- bzw. Ausgangssignale des Netzwerkes bilden,
- wobei dieses Netzwerk noch umfasst:
- ein Steuerorgan (A2-1), das mit den abonnierten Posten verbunden ist, um zu jedem Zeitpunkt einem einzigen dieser Posten das Senden einer Nachricht zu gestatten,
- und mehrere Knoten (N1...N4), die jeweils zu den Gruppen von Posten gehören, wobei jeder zu einer Gruppe von Posten (P1-1...P1-16) gehörige Knoten (N1) auch zu Posten dieser Gruppe gehört und umfasst:
- primäre Anschlüsse (B1...B16), um zu gestatten, dass dieser Knoten mit diesen zugehörigen Posten Nachrichten austauscht, wobei diese Nachrichten primär sind, wobei diese primären Nachrichten gleichzeitig eingehend (S2) oder hinausgehend (S8, T10) sind, je nachdem, ob sie von diesem Knoten empfangen oder gesendet werden,
- wenigstens zwei sekundäre Anschlüsse (B17...B20), um zu gestatten, dass dieser Knoten mit weiteren Knoten (N2...N4) Nachrichten austauscht, wobei diese Nachrichten sekundär sind, wobei diese sekundären Nachrichten gleichzeitig eingehend (T1) oder hinausgehend (S11, T8) sind, je nachdem, ob sie von diesem Knoten empfangen oder gesendet werden, wobei diese eingehenden und hinausgehenden, primären und sekundären Nachrichten die Form optischer Signale aufweisen, die aus Modulationen optischer Trägerwellen bestehen, wobei Wellenlängen dieser Trägerwellen jeweils die Wellenlängen dieser Nachrichten bilden,
- Verstärker (8, 10), um elektrische Empfangssignale (S4, T4) zu empfangen und um in Antwort verstärkte elektrische Signale (S5, T5) zu liefern,
- und Transducer, wobei jeder dieser Transducer entweder Empfänger (2, 6) zum Überführen einer Information eines von einem Anschluss (B1, B17) stammenden, optischen Signals (S3, T3) in ein elektrisches Empfangssignal (S4, T4), das an einen Verstärker (8, 10) geliefert wird, oder Sender (4) zum Überführen einer Information eines von einem Verstärker (8, 10) stammenden, verstärkten elektrischen Signals (S5, T5) in ein optisches Signal (S6, T6) ist, das an einen Anschluss (B1, B16, B17) geliefert wird, wobei dieser Transducer gleichzeitig entweder primär oder sekundär ist, je nachdem, ob dieser Anschluss primär oder sekundär ist, so dass ausgehend von eingehenden Nachrichten die hinausgehenden Nachrichten gebildet werden,
- wobei jeder Sender oder Empfänger eines Postens und jeder Transducer eines Knotens auf eine Wellenlänge eingestellt sind, die diejenige der optischen Signale ist, deren Information er überführt,
- wobei dieses Netzwerk noch umfasst:
- primäre optische Fasern (FP1-1...P1-16), die die optischen Anschlüsse (16) der Posten (P1-1...P1-16) jeder Gruppe von Posten entsprechend mit den primären Anschlüssen (B1...B16) des zu dieser Gruppe von Posten gehörigen Knotens (N1) verbinden, damit die von diesen Posten gesendeten Nachrichten die primären Nachrichten bilden, die in diesen Knoten hineingehen, und dass die primären Nachrichten, die diesen Knoten verlassen, von diesen Posten empfangen werden,
- und sekundäre optische Fasern (FN1-2 FN1-4), die jeweils zwei sekundäre Anschlüsse verbinden, die entsprechend zu zwei Knoten (N1, N2, N4) gehören, damit die sekundären Nachrichten, die den einen dieser Knoten verlassen, die sekundären Nachrichten bilden, die in den anderen hineingehen,
dadurch gekennzeichnet, dass die primären eingehenden (S2) und hinausgehenden Nachrichten (S8, T10) eine erste bzw. zweite Wellenlänge dieses Netzwerkes haben, wobei diese beiden Wellenlängen verschieden sind und eine von ihnen eine gemeinsame Wellenlänge bildet, wobei die sekundären eingehenden (T1) und hinausgehenden Nachrichten (S11, T8) diese gemeinsame Wellenlänge haben,
- wobei jeder Posten (P1-1) umfasst:
- einen optischen Anschluss (16),
- und einen Wellenlängenseparator (18), der diesen Anschluss einerseits mit dem Sender (12) dieses Postens, was diese erste Wellenlänge betrifft, und andererseits mit dem Empfänger (14) dieses Postens verbindet, was diese zweite Wellenlänge betrifft,
- wobei der zu diesem Posten gehörige Knoten (N1) umfasst:
- einen primären Anschluss (B1), der zu diesem Posten gehört und durch eine primäre Faser (FP1-1) mit dem optischen Anschluss (16) dieses Posten verbunden ist,
- einen Wellenlängenseparator (20),
- einen primären Empfangstransducer (2), der auf diese erste Wellenlänge eingestellt und mittels wenigstens dieses Separators (20) mit diesem primären Anschluss (B1) verbunden ist, was diese erste Wellenlänge betrifft,
- einen primären Sendetransducer (4), der auf diese zweite Wellenlänge eingestellt und mittels wenigstens dieses Separators mit diesem primären Anschluss verbunden ist, was diese zweite Wellenlänge betrifft, wobei derjenige dieser beiden primären Transducer, der auf die gemeinsame Wellenlänge eingestellt ist, einen gemeinsamen Transducer (4) bildet, wobei der andere dieser beiden primären Transducer einen den primären Nachrichten zugeordneten Transducer (2) bildet,
- einen optischen passiven Koppler (22),
- einen sekundären Empfangstransducer (6), der auf die gemeinsame Wellenlänge eingestellt ist und mittels dieses passiven Kopplers (22) mit einem sekundären Anschluss (B17) optisch verbunden ist,
- einen sekundären Sendetransducer (6), der auf die gemeinsame Wellenlänge eingestellt ist, und mittels des passiven Kopplers (22) mit einem sekundären Anschluss (B17) optisch verbunden ist, wobei der eine dieser beiden sekundären Transducer aus dem gemeinsamen Transducer besteht und der sekundäre Sende- (4) oder Empfangstransducer (104) ist, je nachdem, ob dieser gemeinsame Transducer aus dem primären Sende- oder Empfangstransducer besteht, wobei der andere dieser beiden sekundären Transducer einen den sekundären Nachrichten zugeordneten Transducer (6, 106) bildet, wobei der gemeinsame Transducer (4, 104) mittels zweier Verstärker (8, 10, 108, 110) entsprechend mit zwei zugeordneten Transducern (2, 6, 102, 106) elektrisch verbunden ist.

4. Netzwerk nach Anspruch 3, dadurch gekennzeichnet, dass der passive Koppler (22) zwei Anschlusspaare (30, 32) (34, 36) aufweist und fähig ist, an wenigstens einem Anschluss jedes dieser Paare ein optisches Signal zu empfangen und dann dieses Signal zu teilen, um es auf jedem der beiden Anschlüsse des anderen Paares teilweise zu rekonstruieren, wobei der gemeinsame Transducer (4) mittels dieses passiven Kopplers und des Wellenlängenseparators (20) in Serie mit dem primären Anschluss (B1) des Knotens (N1) optisch verbunden ist, so dass die Übertragung von optischen Signalen zwischen diesem Transducer und diesem Anschluss gestattet wird.

5. Netzwerk nach Anspruch 3, dadurch gekennzeichnet, dass der Wellenlängenseparator (20) den gemeinsamen Transducer (4) und den den primären Nachrichten zugeordneten Transducer (2) mittels eines primären, passiven, optischen Teilers (24) mit mehreren Anschlüssen (B1...B16) des Knotens (N1) gleichzeitig verbindet.

6. Netzwerk nach Anspruch 3, dadurch gekennzeichnet, dass der Wellenlängenseparator (20) den gemeinsamen Transducer (4) und den den primären Nachrichten zugeordneten Transducer (2) mittels eines primären, passiven, ersten Teilers (24) mit allen primären Anschlüssen (B1...B16) des Knotens (Nl) gleichzeitig verbindet.

7. Netzwerk nach Anspruch 3, dadurch gekennzeichnet, dass der passive Koppler (22) den gemeinsamen Transducer (4) und den den sekundären Nachrichten zugeordneten Transducer (6) mittels eines sekundären, passiven, optischen Teilers (26) mit mehreren sekundären Anschlüssen (B17...B20) des Knotens (N1) verbindet.

8. Netzwerk nach Anspruch 3, dadurch gekennzeichnet, dass der passive Koppler (22) den gemeinsamen Transducer (4) und den den sekundären Nachrichten zugeordneten Transducer (6) mittels eines sekundären, passiven, optischen Teilers (26) mit allen sekundären Anschlüssen (B17...B20) des Knotens (N1) verbindet.

9. Netzwerk nach Anspruch 3, dadurch gekennzeichnet, dass die sekundären Fasern (FN1-2, FN1-10, F2-3, FN2-4) für die gemeinsame Wellenlänge einen kleineren Absorptionskoeffizienten als für die andere Wellenlänge des Netzwerkes haben.

## Claims

1. A local area network with optical transmission and including:
terminal sets (P1-1...P4-16) capable of transmitting and receiving optical signals;
nodes (N1...N4);
primary fibers (FP1-1...FP1-16) optically connecting each of the nodes (N1) to sets (P1-1...P1-1) associated with the node; and
secondary fibers (FN1-2, FN1-4) optically connecting each of the nodes (N1) to other nodes constituting nodes connected directly to the node (N1) so that each of the nodes is connected at least indirectly to all of the others;
each of the nodes (N1) being capable of receiving an incoming optical signal (S2, T1) carrying data via one of the fibers, and of responding by transmitting corresponding outgoing optical signals (S8, S11, T8, T10) carrying the data to all of the associated sets (P1-1...P1-16) and to all of the nodes (N2, N4) connected directly to the node, which node includes the following for that purpose and for each association of an incoming optical signal (S2) and of a corresponding outgoing optical signal (S8, S11):
a receive transducer (2, 6) for transforming the incoming optical signal into an electrical reception signal (S4);
an amplifier (8, 10) for amplifying the electrical signal; and
a transmit transducer (4) for transforming the amplified electrical signal (S5) into an outgoing optical signal, each receive transducer (2, 6, 104) or transmit transducer (4, 102, 106) being a primary transducer (2, 4, 102, 104) if the optical signal is transmitted via a primary fiber, the transducer being a secondary transducer (4, 6, 104, 106) if the signal is transmitted via a secondary fiber;
the network being characterized by the fact that the receive primary transducers (2, 104) and the transmit primary transducers (4, 102) are tuned to two different respective wavelengths;
a single primary fiber (FP1-1) connecting each set (P1-1) to the associated node (N1);
the receive secondary transducers (6, 104) and the transmit secondary transducers (4, 106) being tuned to one of the two wavelengths constituting a common wavelength;
a single secondary fiber (FN1-2) interconnecting two nodes (N1, N2) when the two nodes are connected together directly;
means being provided so that, when a first node (N1) transmits an optical signal over the secondary fibers (FN1-2, FN1-4), an optical signal transmitted in response by a second node (N2) cannot interfere with the operation of the first node.

2. A network according to claim 1, characterized by the fact that each node (N1) includes a common transducer (4, 104) tuned to the common wavelength, and constituting both a primary transducer and a secondary transducer.

3. A network according to claim 2, the network including a plurality of terminal sets (P1-1...P4-16) each provided with an optical connection terminal (16), each set including:
a transmitter (12) capable of receiving an input signal (S1) carrying data and of responding by supplying a message (S2) including the data and transmitted by the set; and
a receiver (14) for processing a message (S8, T10) including data and received by the set, the receiver being capable of responding by supplying an output signal (S9, T11) including the data;
the sets being distributed in a plurality of groups of sets (P1-1...P1-16) (P2-1...P2-16), each group comprising at least one set;
at least some of the sets being subscriber sets (P1-1...P1-16, P2-2...P4-16) connected to respective subscribers (A1-1...A1-16, A2-2...A4-16) outside the network, so that it is possible for each subscriber (A1-1) connected to a set (P1-1) both to include data to be transmitted to the other subscribers in an input signal (S1) of the set, and also to receive the output signals (S9, T11) of the set so as to use the data therefrom, so that the input signals and the output signals of the subscriber sets respectively constitute input signals and output signals of the network;
the network further including:
a management member (A2-1) connected to the subscriber sets so that, at any given time, only one of the sets is allowed to transmit a message; and
a plurality of nodes (N1...N4) associated with respective ones of said groups of sets, each node (N1) associated with a group of sets (P1-1...P1-16) also being associated with the sets in the group and including:
primary connection terminals B1...B16 for enabling messages to be interchanged between the node and the associated sets, these messages being primary messages and at the same time incoming messages (S2) or outgoing messages (S8, T10) depending on whether they are received or transmitted by the node;
at least two secondary connection terminals (B17...B20) for enabling messages to be interchanged between the node and other nodes (N2...N4), these messages being secondary messages and at the same time incoming messages (T1) or outgoing messages (S11, T8) depending on whether they are received or transmitted by the node, the primary and secondary, incoming and outgoing messages are in the form of optical signals constituted by modulations in optical carrier waves, the wavelengths of the carrier waves constituting the respective wavelengths of the messages;
amplifiers (8, 10) for receiving electrical reception signals (S4, T4), and for responding by supplying amplified electrical signals (S5, T5); and
transducers, each of the transducers being either a receive transducer (2, 6) for transferring data from an optical signal (S3, T3) coming from a terminal (B1, B17) to an electrical reception signal (S4, T4) supplied to an amplifier (8, 10), or else a transmit transducer (4) for transferring data from an amplified electrical signal (S5, T5) coming from an amplifier (8, 10) to an optical signal (S6, T6) supplied to a terminal (B1, B16, B17), the transducer at the same time being either a primary transducer or a secondary transducer depending on whether the terminal is a primary terminal or a secondary terminal, so as to form the outgoing messages from the incoming messages;
each transmitter or receiver of a set and each transducer of a node being tuned to a wavelength which is that of the optical signals whereby it transfers the data;
the network further including:
primary optical fibers (FP1-1...FP1-16) connecting the optical terminals (16) of the sets (P1-1...P1-16) of each group of sets to respective ones of the primary terminals (B1...B16) of the node (N1) associated with the group of sets, so that the messages transmitted by the sets constitute the incoming primary messages of the node and so that the outgoing primary messages of the node are received by the sets; and
secondary optical fibers (FN1-2, FN1-4), each of which interconnects two secondary terminals belonging to respective ones of two nodes (N1, N2, N4) so that the outgoing secondary messages of one of the nodes constitute the incoming secondary messages of the other node;
the network being characterized by the fact that said incoming primary messages (52) and said outgoing primary messages (S8, T10) respectively have a first wavelength of the network and a second wavelength of the network, the two wavelengths being different and one of them constituting a common wavelength, said incoming secondary messages (T1) and said outgoing secondary messages (S11, T8) having the common wavelength;
each set (P1-1) including:
an optical terminal (16); and
a wavelength separator (18) connecting the terminal both to the transmitter (12) of the set for the first wavelength, and also to the receiver (14) of the set for the second wavelength;
the node (N1) associated with the set including:
one of said primary terminals (B1) associated with the set and connected to the optical terminal (16) of the set via one of said primary fibers (FP1-1);
a wavelength separator (20);
a primary receive transducer (2) tuned to the first wavelength and connected to the primary terminal (B1) via at least the separator (20) for the first wavelength;
a primary transmit transducer (4) tuned to the second wavelength and connected to the primary terminal via at least the separator for the second wavelength, that one of the two primary transducers which is tuned to the common wavelength constituting a common transducer (4), the other of the two primary transducers constituting an assigned transducer assigned to the primary messages (2);
a passive optical coupler (22);
a secondary receive transducer (6) tuned to the common wavelength and optically connected to a secondary terminal (B17) via the passive coupler (22);
a secondary transmit transducer (6) tuned to the common wavelength and optically connected to a secondary terminal (B17) via the passive coupler (22), one of the two secondary transducers being constituted by said common transducer and being the transmit secondary transducer (4) or the receive secondary transducer (104) depending on whether the common transducer is constituted by the transmit primary transducer or by the receive primary transducer, the other of the two secondary transducers constituting an assigned transducer assigned to the secondary messages (6, 106), the common transducer (4, 104) being electrically connected to the two assigned transducers (2, 6, 102, 106) via respective ones of two amplifiers (8, 10, 108, 110).

4. A network according to claim 3, characterized by the fact that the passive coupler (22) has two pairs of terminals (30, 32) (34, 36) and is capable of receiving an optical signal at at least one terminal of each of the pairs, and of then splitting the signal so as to restore it in part at each of the two terminals of the other pair, the common transducer (4) being optically connected to said primary terminal (B1) of said node (N1) via the passive coupler and the wavelength separator (20) in series so as to enable optical signals to be transmitted between the transmitter and the terminal.

5. A network according to claim 3, characterized by the fact that the wavelength separator (20) connects the common transducer (4) and the assigned transducer assigned to the primary messages (2) to a plurality of primary terminals (B1...B16) of said node (N1) simultaneously via a primary passive optical divider (24).

6. A network according to claim 3, characterized by the fact that the wavelength separator (20) connects the common transducer (4) and the assigned transducer assigned to the primary messaqes (2) to all of the primary terminals (B1...B16) of said node (N1) simultaneously via a primary passive optical divider (24).

7. A network according to claim 3, characterized by the fact that the passive coupler (22) connects the common transducer (4) and the assigned transducer assigned to the secondary messages (6) to a plurality of the secondary terminals (B17...B20) of said node (N1) via a secondary passive optical coupler (26).

8. A network according to claim 3, characterized by the fact that the passive coupler (22) connects the common transducer (4) and the assigned transducer assigned to the secondary messages (6) to all of the secondary terminals (B17...B20) of said node (N1) via a secondary passive optical divider (26).

9. A network according to claim 3, characterized by the fact that said secondary fibers (FN1-2, FN1-10, F2-3, FN2-4) have a lower coefficient of absorption for said common wavelength than for the other wavelength of the network.
